Europäisches Patentamt

European Patent Office

Office européen des brevets

(11) Publication number: **0 105 978**

**B1**

# EUROPEAN PATENT SPECIFICATION

(45) Date of publication of patent specification: **01.10.86**

(51) Int. Cl.⁴: **C 04 B 35/58, C 04 B 41/85**

(21) Application number: **82305265.9**

(22) Date of filing: **04.10.82**

(54) Improvements in or relating to the formation of profiled ceramic bodies.

(43) Date of publication of application:
**25.04.84 Bulletin 84/17**

(45) Publication of the grant of the patent:
**01.10.86 Bulletin 86/40**

(84) Designated Contracting States:
**CH DE FR IT LI**

(56) References cited:
**EP-A-0 013 433**
**EP-A-0 027 639**
**DE-A-2 940 629**
**FR-A-2 259 800**
**FR-A-2 339 584**
**GB-A-1 312 688**
**GB-A-2 010 915**
**GB-A-2 063 302**

**CHEMICAL ABSTRACTS, vol. 92, no. 18, May
1980, pages 326, 327, no. 151967w, Columbus,
Ohio, USA**

**The file contains technical information
submitted after the application was filed and
not included in this specification**

(73) Proprietor: **TRW Ceramics Limited
Denby Derby DE5 8NX (GB)**

(72) Inventor: **Wilson, William Ian
25 Woodlands Lane
Quarndon Derby (GB)**

(74) Representative: **Drever, Ronald Fergus et al
Swindell & Pearson 44, Friar Gate
Derby DE1 1DA (GB)**

(56) References cited:
**CHEMICAL ABSTRACTS, vol. 95, no. 22,
November 1981, page 275, no. 191430j,
Columbus, Ohio, USA**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention is concerned with improvements in or relating to the production of ceramic materials and particularly to the formation of profiled ceramic bodies. The invention is particularly concerned with the formation of such bodies which have high strength characteristics and the ability to withstand high temperatures, such bodies being advantageously used in the production of military aircraft engines for the aerospace industry.

Silicon nitride is a conventional engineering ceramic material used for the manufacture of profiled bodies, but reaction bonded silicon nitride normally has four point bend strength characteristics of 30,000—40,000 p.s.i. (2040—2720 N/mm²), whereas, in the desired applications, ceramic materials are required having bend strength characteristics of around 100,000 p.s.i. (6800 N/mm²).

Conventionally, to improve the strength characteristics, hot pressing of the silicon nitride is carried out, but this is a time consuming and expensive method which is thus undesirable, and the strength of the material reduces at around 1,000°C.

The reduction in strength of hot pressed material at temperatures of much above 1,000°C is due to the presence of sintering aides which react with silica, in the silicon nitride, to form low melting silicates.

Alternatively, to provide a high strength material, it has been proposed to combine aluminium nitride and/or alumina with the silicon nitride to form a material now known as "sialon". However glass can still be formed at the grain boundaries in sialon and therefore, although the sialon material has the required high strength characteristics, it does not have the required high temperature characteristics when so formed. Further, conventional engineering ceramics have intolerable shrinkage levels when injection moulded and thus bodies profiled to high accuracy level cannot be obtained.

Prior methods of forming sialon are described in Chemical Abstracts, Vol. 95, nr. 22, November 1981, page 275, nr. 191430j; DE—A—2 940 629; FR—A—2 339 584 and Chemical Abstracts, Vol. 92, nr. 18, May 1980, pages 326, 327, nr. 151967 w. These documents describe the formation of bodies of sialon by reaction of moulded material with additional material.

Hereinafter the term "high strength characteristics" is to be interpreted as the property of a material enabling the material to retain its bend strength up to around 100,000 p.s.i. (6800 N/mm²), and the term "high temperature characteristics" is to be interpreted as the property of a material enabling the material to retain its bend strength at temperatures above 1,000°C.

According to one aspect of the present invention there is provided a method of forming a profiled body of a ceramic material having characteristics enabling the material to retain its bend strength up to around 100,000 p.s.i. (6800 N/mm²), and characteristics enabling the material to retain its bend strength at temperatures above 1,000°C, characterised in that the method comprises the steps of mixing silicon with a predetermined quantity of aluminium nitride in powdered form, subjecting the mix to injection moulding so as to form the profile body, converting the silicon to silicon nitride, providing a material which, when introduced to the profiled body, will create therein a substance selected from a group including silica, alumina, and aluminium sulphate, so introducing the material to the whole of the profiled body as to infiltrate voids created therein during the converting of the silicon to silicon nitride, and thus reduce the likelihood of shrinkage of the body, and firing the profiled body, whereby reaction of the profiled body and the introduced material and silica which is inherent at boundaries in the formed silicon nitride forms a body having the high strength characteristics free of unconverted silica to prevent strength loss at high temperature.

Further the invention provides a method of forming a profiled body of a ceramic material having characteristics enabling the material to retain its bend strength up to around 100,000 p.s.i. (6800 N/mm²) and characteristics enabling the material to retain its bend strength at temperatures above 1,000°C, characterised in that the method comprises the steps of mixing silicon with a predetermined quantity of aluminium in powdered form, subjecting the mix to injection moulding so as to form the profiled body, converting the silicon to silicon nitride and the aluminium to aluminium nitride, providing a material which, when introduced to the profiled body, will create therein a substance selected from a group including silica, alumina and aluminium sulphate, so introducing the material to the whole of the profiled body as to infiltrate voids created therein during the converting of the silicon to silicon nitride, and thus reduce the likelihood of shrinkage of the body, and firing the profiled body, whereby reaction of the profiled body with the introduced material and silica which is inherent at boundaries in the formed silica nitride forms a body having the high strength characteristics free of unconverted silica to prevent strength loss at high temperatures.

Preferably silica is introduced into the voids in the silicon nitride by dipping the profiled body in a silica solution. Alternatively the profiled body may be internally oxidised so as to fill the voids with silica from the silicon nitride.

An embodiment of the present invention will now be described by way of example only.

In the aerospace industry, high accuracy profiled bodies are required, particularly in military engines, and cores of ceramic material used in the production of the profiled bodies accordingly require a high accuracy profile. It is necessary for such ceramic materials to have high strength characteristics . and also high temperature characteristics.

To produce such a body, a predetermined amount of aluminium nitride in powder form is firstly milled with a silicon powder and a suitable binder to make a "dough" suitable for injection moulding. The mix is then injection moulded so as to form a profiled body and organic materials in the body such as the binder are then burnt out.

The body is subsequently placed in a furnace where nitrogen is passed over the body in a conventional manner to convert the silicon to silicon nitride. The latter material when so formed is formed with pores or voids which occupy around 20% of the volume of the material. The silicon nitride so formed has also present some coherent silica.

The profiled body is then dipped in a silica solution such that the silica in solution can infiltrate into the pores. The addition of the silica reduces the likelihood of shrinkage of the body. The infiltrated silica, as well as the unconverted silica present in the body, reacts with the aluminium nitride when the body is subsequently fired at high temperature, for example around 1800°C, in a controlled atmosphere to form sialon. This sialon reacts with the silicon nitride to form a "dilute" homogeneous sialon which has the desired high strength characteristics. As the unconverted silica has been utilised in this reaction there is no silica left available at grain boundaries to form silicates or glasses which would otherwise weaken the material at high temperatures. Any alumina which may be associated with the alumina nitride as an oxidation or hydrolysis product, can be compensated for by slightly altering the ratio of the reactants. In this way all reactants are incorporated as a sialon with minimum shrinkage.

In a modification of this method, the profiled body may be internally oxidised so as to fill the void with silica from the silicon nitride. The body may, for example, be infiltrated with a proprietary alumina sol, being then dried and fired to at least 1800°C in a controlled atmosphere. Alternatively, the silicon nitride is infiltrated with an aqueous solution of aluminium sulphate. Then before or after drying, the body is treated in ammonia solution so that aluminium hydroxide is precipitated in the pores of the body. Subsequent heat treatment decomposes the hydroxide to aluminium oxide. The body is then fired to at least 1800°C in a controlled atmosphere to form a sialon.

There is thus provided a method of forming an engineering ceramic having high strength characteristics and high temperature characteristics without the requirement of the time consuming and expensive method of hot pressing silicon nitride and without the inherent disadvantages of combining silicon nitride with aluminium nitride.

In a variation of the method, aluminium powder can be milled in the first stage with the silicon powder and the aluminium converted to aluminium nitride simultaneously as the silicon is converted to silicon nitride in the nitriding furnace.

## Claims

1. A method of forming a profiled body of a ceramic material having characteristics enabling the material to retain its bend strength up to around 100,000 p.s.i. (6800 N/mm$^2$) and characteristics enabling the material to retain its bend strength at temperatures above 1,000°C, characterised in that the method comprises the steps of mixing silicon with a predetermined quantity of aluminium nitride in powdered form, subjecting the mix to injection moulding so as to form the profiled body, converting the silicon to silicon nitride, providing a material which, when introduced to the profiled body, will creat therein a substance selected from a group including silica, alumina, and aluminium sulphate, so introducing the material to the whole of the profiled body as to infiltrate voids created therein during the converting of the silicon to silicon nitride, and thus reduce the likelihood of shrinkage of the body, and firing the profiled body, whereby reaction of the profiled body and the introduced material and silica which is inherent at boundaries in the formed silicon nitride forms a body having the high strength characteristics free of unconverted silica to prevent strength loss at high temperature.

2. A method of forming a profiled body of a ceramic material having characteristics enabling the material to retain its bend strength up to around 100,000 p.s.i. (6800 N/mm$^2$) and characteristics enabling the material to retain its bend strength at temperatures above 1,000°C, characterised in that the method comprises the steps of mixing silicon with a predetermined quanitity of aluminium in powdered form, subjecting the mix to injection moulding so as to form the profiled body, converting the silicon to silicon nitride and the aluminium to aluminium nitride, providing a material which, when introduced to the profiled body, will create therein a substance selected from a group including silica, alumina and aluminium sulphate, so introducing the material to the whole of the profiled body as to infiltrate voids created therein during the converting of the silicon to silicon nitride, and thus reduce the likelihood of shrinkage of the body, and firing the profiled body, whereby reaction of the profiled body with the introduced material and silica which is inherent at boundaries in the formed silicon nitride forms a body having the high strength characteristics free of unconverted silica to prevent strength loss at high temperatures.

3. A method according to claim 1 or 2, characterised in that alumina is introduced in the form of an alumina sol.

4. A method according to claim 1 or 2, characterised in that alumina is introduced by adding aluminium sulphate, the body being treated in ammonia solution to precipitate aluminium hydroxide in the voids and then being heated to decompose the aluminium hydroxide to aluminium oxide prior to firing.

5. A method according to claim 1 or 2, characterised in that the profiled body is internally oxidised so as to fill the voids with silica from the silicon nitride.

**Patentansprüche**

1. Verfahren zur Herstellung eines Profilkörpers aus keramischem Material mit Eigenschaften, die ihm seine Biegebruchfestigkeit bis zu ungefähr 100.000 p.s.i. (6.800 N/mm²) erhalten und mit Eigenschaften, die ihm seine Biegebruchfestigkeit bei Temperaturen von über 1000°C erhalten, gekennzeichnet durch die Verfahrensschritte, daß Silicium und eine vorbestimmte Menge Aluminiumnitrid in Pulverform vermischt wird, daß zur Bildung des Profilkörpers die Mixtur einem Spritzgußverfahren unterworfen wird, daß das Silicium in Siliciumnitrid ungewandelt wird, daß ein Material zugesetzt wird, das beim Einbringen in den Profilkörper dort eine Substanz erzeugt, die aus einer Siliciumoxid, Aluminiumoxid und Aluminiumsulfat enthaltenden Gruppe ausgewählt wird und daß dieses Material in den gesamten Profilkörper eingebracht wird, so daß dort während der Umwandlung des Siliciums in Siliciumnitrid entstandene Hohlräume ausgefüllt werden und dadurch die Wahrscheinlichkeit eines Schrumpfens des Körpers verhindert wird, und daß der Profilkörper gebrannt wird, wobei die Reaktion des Profilkörpers mit dem eingebrachten Material und mit Siliciumoxid, das inhärent in Grenzbereichen des gebildeten Siliciumnitrid vorhanden ist, einen Körper mit hoher Widerstandsfähigkeit schafft, der kein nicht umgewandeltes Siliciumoxid mehr aufweist, um einen Verlust an Widerstandsfähigkeit bei hoher Temperatur zu verhindern.

2. Verfahren zur Herstellung eine Profilkörpers aus keramischem Material mit Eigenschaften, die ihm seine Biegebruchfestigkeit bis zu ungefähr 100000 p.s.i. (6800 N/mm²) erhalten und mit Eigenschaften, die ihm seine Biegebruchfestigkeit bei Temperaturen von über 1000°C erhalten, gekennzeichnet durch die Verfahrenschritte, daß Silicium und. eine vorbestimmte Menge Aluminium in Pulverform vermischt wird, daß zur Bildung des Profilkörpers die Mixtur einem Spritzgußverfahren unterworfen wird, daß das Silicium in Siliciumnitrid und das Aluminium in Aluminiumnitrid umgewandelt wird, daß ein Material zugesetzt wird, das beim Einbringen in den Profilkörper dort eine Substanz erzeugt, die aus einer Siliciumoxid, Aluminiumoxid und Aluminiumsulfat enthaltenden Gruppe ausgewählt wird und daß dieses Material in den gesamten Profilkörper eingebracht wird, so daß dort während der Umwandlung des Siliciums in Siliciumnitrid entstandene Hohlräume ausgefüllt werden und dadurch die Wahrscheinlichkeit eines Schrumpfens des Körpers verhindert wird, und daß der Profilkörper gebrannt wird, wobei die Reaktion des Profilkörpers mit dem eingebrachten Material und mit Siliciumoxid, das inhärent in Gerenzbereichen des gebildeten Siliciumnitrid vorhanden ist, einen Körper mit hoher Widerstandsfähigkeit schafft, der kein nicht ungewandeltes Siliciumoxid mehr aufweist, um einen Verlust an Widerstandsfähigkeit bei hoher Temperatur zu verhindern.

3. Verfahren nach Anspruch 1 oder 2, dadurch gekennzeichnet, daß Aluminiumoxid in Form einer kolloidalen Aluminiumoxidlösung eingebracht wird.

4. Verfahren nach Anspruch 1 oder 2, dadurch gekennzeichnet, daß Aluminiumoxid unter Hinzufügung von Aluminiumsulfat eingebracht wird, daß der Körper in Ammoniaklösung behandelt wird, um Aluminiumhydroxid in den Hohlräumen abzuscheiden, und dann erhitzt wird, um vor dem Brennen das Aluminiumhydroxid in Aluminiumoxid abzubauen.

5. Verfahren nach Anspruch 1 oder 2, dadurch gekennzeichnet, daß der Profilkörper innen oxidiert wird, um die Hohlräume mit Siliciumoxid aus dem Siliziumnitrid zu füllen.

**Revendications**

1. Procédé de formation d'un corps profilé en un matériau céramique présentant des caractéristiques qui lui permettent de conserver une résistance à la flexion atteignant environ 100.000 p.s.i. (6800 N/mm²) et des caractéristiques qui lui permettent de conserver sa résistance à la flexion à des températures supérieures à 1.000°C, caractérisé en ce qu'il comporte les étapes de mélange de silicone avec une quantité prédéterminée de nitrure d'aluminium sous forme pulvérulente, de soumission du mélange à un moulage par injection de façon à former le corps profilé, de transformation du silicone en nitrure de silicone, de fourniture d'un matériau qui, quand il est introduit dans le corps profilé, y forme une substance choisie dans le groupe comprenant la silice, l'alumine et le sulfate d'alumine, d'introduction du matériau dans l'ensemble du corps profilé de façon à ce qu'il s'infiltre dans les vides qui y ont été créés pendant la transformation du silicone en nitrure de silicone et à réduire ainsi la probabilité de retrait du corps, et de cuite du corps profilé, la réaction du corps profilé, du matériau introduit et de la silice inhérente aux délimitations dans le nitrure de silicone formé formant un corps présentant les caractéristiques de résistance élevée dépourvu de silice non transformée pour empêcher toute perte de résistance aux températures élevées.

2. Procédé de formation d'un corps profilé en un matériau céramique présentant des caractéristiques qui lui permettent de conserver une résistance à la flexion atteignant environ 100.000 p.s.i. (6800 N/mm²) et des caractéristiques qui lui permettent de conserver sa résistance à la flexion à des températures supérieures à 1.000°C, caractérisé en ce qu'il comporte les étapes de mélange de silicone avec une quantité prédéterminée d'aluminium sous forme pulvérulente, de soumission du mélange à un moulage par injection de façon à former le corps profilé, de transformation du silicone en nitrure de silicon et de l'aluminium en nitrure d'aluminium, de fourniture d'un matériau qui, quand il est introduit dans le corps profilé, y forme une substance choisie dans le groupe comprenant la silice, l'alumine et le sulfate d'alumine, d'introduction du matériau dans l'ensemble du corps profilé de façon à ce qu'il s'infiltre dans les vides qui y ont été crées pendant la transformation du silicone en nitrure de silicone et à réduire ainsi la probabilité de retrait du corps, et de cuite du corps profilé, la réaction du corps profilé, du matériau introduit et de la silice inhérente aux délimitations dans le nitrure de silicone formé formant un corps présentant les caractéristiques de résistance élevée dépourvu de silice non transformée pour empêcher toute perte de résistance aux températures élevées.

3. Procédé selon la revendication 1 ou la revendication 2, caractérisé en ce que l'alumine est introduite sous forme de solution colloïdale d'alumine.

4. Procédé selon la revendication 1 ou la revendication 2, caractérisé en ce que l'alumine est introduite par addition de sulfate d'aluminium, le corps étant traité en solution ammoniacale pour précipiter l'hydroxyde d'aluminium dans les vides puis chauffé pour décomposer l'hydroxyde d'aluminium en oxyde d'aluminium avant la cuisson.

5. Procédé selon la revendication 1 ou la revendication 2, caractérisé en ce que le corps profilé est oxydé intérieurement de façon à remplir les vides de silice provenant du niture de silicone.